# EUROPEAN PATENT APPLICATION

(11) **EP 4 645 072 A1**
(43) Date of publication of application: **05.11.2025**
(21) Application number: 25171798.9
(22) Date of filing: 22.04.2025
(51) Int. Cl.: G06F 8/70, G06F 11/3668, G06N 20/00

(54) **FINE-TUNING MACHINE LEARNING CODE UPDATES EVALUATOR**

(30) Priority: 30.04.2024 US 202418651678
(71) Applicant: Microsoft Technology Licensing, LLC, Redmond, WA 98052 (US)
(72) Inventor: WU, Ming, Redmond, 98052 (US); YU, Zhiguo, Redmond, 98052 (US); REDFORD, Elizabeth Sarah, Redmond, 98052 (US); LAI MILLER, Ivy, Redmond, 98052 (US)
(74) Representative: CMS Cameron McKenna Nabarro Olswang LLP

(57) **Abstract**

Example solutions provide artificial intelligence (AI) annotated quality gating for code intelligence tools. A code intelligence tool update generates test results, which are evaluated by an evaluator, producing evaluation results. A quality score is determined for the evaluation results using a hierarchical quality criteria structure. This enables determination of whether the evaluator is providing a proper assessment of the code intelligence tool update (or may instead be rating the code intelligence tool update undeservedly high). If the evaluator is not providing a proper assessment of the code intelligence tool update, there is a risk that an underperforming update may be performed on the currently operational code intelligence tool, degrading the performance. The evaluator is tuned to improve the quality score. Using this two-tier assessment approach permits robust scaling. Human intervention is performed on the evaluator, which in turn handles the larger task of evaluating code intelligence tool updates.

## Description

### BACKGROUND

As large language models (LLMs) are being applied to an expanding range of applications, ensuring the quality of the LLM, in terms of suitability for the new tasks, is significant. Just because an LLM may excel at some language-intensive tasks (whether natural language, or specialized languages such as software code and database query languages) does not mean that an LLM will perform well at another task - even if specifically trained for that task. For example, if a first LLM is being used to evaluate (i.e., assess) the performance of a second LLM, such as evaluating the quality of an output of the second LLM, there is a risk that the first LLM will be biased to rate the quality of the second LLM's output undeservedly high. This may occur for a variety of reasons, including potential overlap in training methods and source material.

One recent new use of LLMs is as the core engine of a code intelligence tool, which performs tasks such as code completion (e.g., authoring software code according to some specified request) and/or chat functions in which the questions and/or responses may include a mixture of natural language and software code. This use of LLMs is maturing. However, the LLMs used in such tasks are routinely updated with (hopefully) improved, better trained models. A function, commonly called quality gating, is used to ascertain whether a proposed update to the model within the code intelligence tool (a code intelligence tool update) will actually improve the functionality of the code intelligence tool, or instead might actually degrade it.

Thus, the reliability of the quality gating function is paramount. A reliable quality gating function, whose evaluation of a proposed code intelligence tool update matches that of an expertly-skilled human programmer, will properly improve the code intelligence tool over time. In stark contrast, a quality gating function, that is biased to rate the quality of the proposed code intelligence tool update undeservedly high, or risks producing ungrounded content, may either degrade the code intelligence tool over time or stagnate performance.

### SUMMARY

The disclosed examples are described in detail below with reference to the accompanying drawing figures listed below. The following summary is provided to illustrate some examples disclosed herein.

Example solutions for providing artificial intelligence (AI) annotated quality gating for code intelligence tools include: receiving, by a quality gating function, a code intelligence tool update; generating test results using the code intelligence tool update operating on code intelligence tool test data; generating first evaluation results using an evaluator operating on the test results; determining a quality score of the first evaluation results using a hierarchical quality criteria structure; tuning the evaluator to improve the quality score; after the tuning, generating second evaluation results using the evaluator operating on the test results; and based on at least the second evaluation results meeting success criteria, updating an operational code intelligence tool with the code intelligence tool update.

### BRIEF DESCRIPTION OF THE DRAWINGS

The disclosed examples are described in detail below with reference to the accompanying drawing figures listed below:
FIG. 1 illustrates an exemplary architecture that advantageously provides artificial intelligence (AI) annotated quality gating for code intelligence tools;
FIG. 2 illustrates an exemplary evaluator tuner that may be used in examples of the architecture of FIG. 1;
FIGs. 3 and 4 show flowcharts illustrating exemplary operations that may be performed when using example architectures, such as the architecture of FIG 1; and
FIG. 5 shows a block diagram of an example computing device suitable for implementing some of the various examples disclosed herein.

Corresponding reference characters indicate corresponding parts throughout the drawings.

### DETAILED DESCRIPTION

Due to the complexity, evaluating a code intelligence tool update is a task that is far beyond the scope of human assessors, and further, a human assessor would need to have extensive programming skill to even attempt a portion of the task. Human assessment therefore, does not scale sufficiently to provide a practical quality gating capability. Reference-based assessments can be accurate (simulating a skilled human programmer) but the need to develop canonical solutions or rubrics for every possible user query creates a prohibitive obstacle. Reference-based systems do not scale sufficiently, either.

A model-based assessment, using artificial intelligence (AI) or machine learning (ML, used synonymously with AI herein), such as using a large language model (LLM) or a multimodal model (MM, which includes LLMs), is able to scale. However, the risk of pro-machine bias, in which the model-based assessment rates the code intelligence tool update undeservedly high, or risks producing ungrounded content, presents a drawback due to unknown accuracy or reliability. Thus, currently, no existing approaches offer scalable and robust evaluations that provide high confidence in their accuracy, especially for applications involving code intelligence tools.

Example solutions disclosed herein provide novel AI annotated quality gating for code intelligence tools that are scalable and robust. A code intelligence tool update generates test results, which are evaluated by an evaluator, producing evaluation results. A quality score is determined for the evaluation results using a hierarchical quality criteria structure. This enables determination of whether the evaluator is providing a proper assessment of the code intelligence tool update (or may instead be rating the code intelligence tool update undeservedly high). If the evaluator is not providing a proper assessment of the code intelligence tool update, there is a risk that an underperforming update may be performed on the currently operational code intelligence tool, degrading the performance. The evaluator is tuned to improve the quality score. Using this two-tier assessment approach permits robust scaling. Human intervention is performed on the evaluator, which in turn handles the larger task of evaluating code intelligence tool updates. Thus the human expertise is leveraged to scale by the novel evaluator and evaluator tuning provided herein.

Aspects of the disclosure solve multiple problems that are necessarily rooted in computer technology, such as improving the programming and operation of code intelligence tools by improving the reliability of a quality gating function in a scalable and robust manner. This is accomplished, at least in part, by determining a quality score of evaluation results (by an evaluator operating on test results generated by a code intelligence tool update) using a hierarchical quality criteria structure, and tuning the evaluator to improve the quality score.

The various examples will be described in detail with reference to the accompanying drawings. Wherever preferable, the same reference numbers will be used throughout the drawings to refer to the same or like parts. References made throughout this disclosure relating to specific examples and implementations are provided solely for illustrative purposes but, unless indicated to the contrary, are not meant to limit all examples.

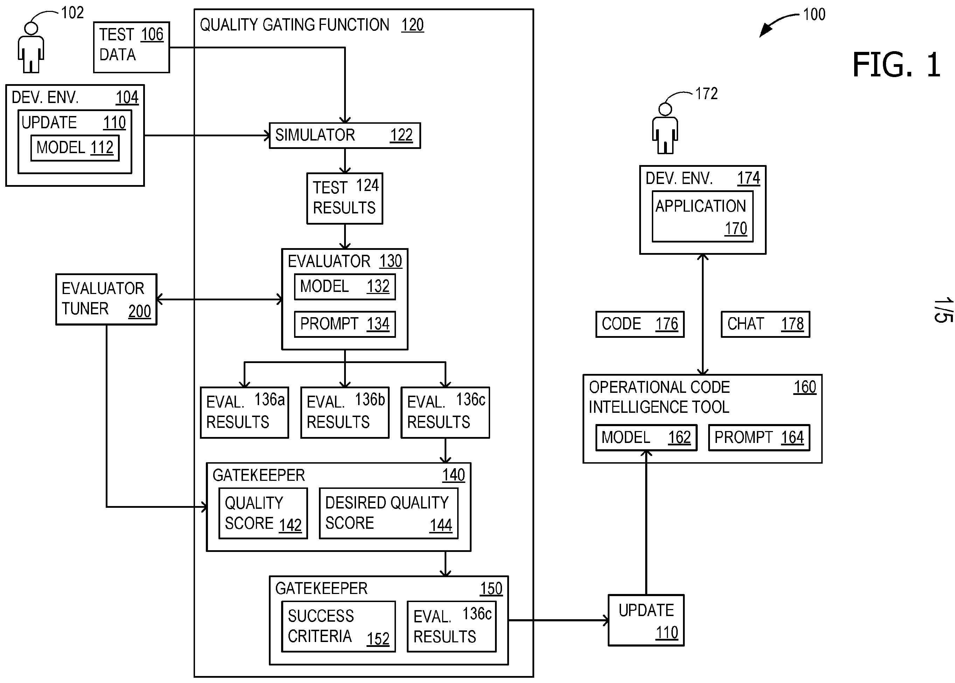

FIG. 1 illustrates an example architecture 100 that advantageously provides AI) annotated quality gating for code intelligence tools. A programmer 172 is leveraging an operational code intelligence tool 160 to assist in the development of a software application 170. An example of operational code intelligence tool 160 may be GitHub CoPilot. A development environment 174, used by programmer 172, is able to reach operational code intelligence tool 160 over a computer network, such as the internet (not shown). Programmer 172 may use operational code intelligence tool 160 for code completion, in which operational code intelligence tool 160 returns software code 176 that is then placed into software application 170. Or, in some scenarios, programmer 172 may use operational code intelligence tool 160 for a chat service 178, in which programmer 172 queries chat service 178 about specific software syntax.

In either scenario, operational code intelligence tool 160 requires capability in a software programming language. This software programming language capability is provided by a language model 162 and a prompt 164 within operational code intelligence tool 160. Language model 162 may be any suitable MM, or another type of AI model (or ML model). The provider of operational code intelligence tool 160 desires that language model 162 improves its performance over time, to keep up with industry expectations and adapt to new programming styles and needs. As a result, a developer 102 is developing a code intelligence tool update 110 within a development environment 104, with the purpose of code intelligence tool update 110 providing an update to operational code intelligence tool 160 that improves the capability of operational code intelligence tool 160.

In some scenarios, code intelligence tool update 110 replaces the entirety of operational code intelligence tool 160, although in other scenarios, code intelligence tool update 110 replaces, supplements, or augments only a portion of operational code intelligence tool 160, such as language model 162 and/or prompt 164. In any case, code intelligence tool update 110 should improve the functionality seen by programmer 172, such as superior-performing software code, or a wider range of available programming functionality, rather than going backwards and offering inferior performance.

Ensuring improved functionality over the wide range of possible tasks envisioned by users of operational code intelligence tool 160, such as programmer 172 is a daunting task, beyond the capability of human assessors, and is thus delegated to a quality gating function 120. In some examples, quality gating function 120 comprises an offline quality gating function. Quality gating function 120 has the role of performing extensive testing of code intelligence tool update 110, for example, evaluating the performance of a language model 112 within code intelligence tool update 110 using code intelligence tool test data 106 that had a wide variety of test cases. Language model 112 may be any MM, or another type of AI model (or ML model).

A simulator 122 within quality gating function 120 generates test results 124 by applying code intelligence tool update 110 to code intelligence tool test data 106. Code intelligence tool test data 106 has sufficient breadth that test results 124 simulates the range of possible tasks that may be demanded of code intelligence tool update 110, such as by programmer 172, if code intelligence tool update 110 were to be approved for updating operational code intelligence tool 160. Thus, test results 124 is far too extensive to be evaluated by humans within the timeframe needed for timely updates to operational code intelligence tool 160.

An evaluator 130, also within quality gating function 120, performs the evaluation of test results 124, because evaluator 130 is able to scale up to the necessary volume of assessments. Evaluator 130 has an evaluation model 132, which uses an evaluation prompt 134 to evaluate test results 124. Evaluation model 132 comprises AI (or ML), and may be any suitable AI model, including an MM (or LLM).

Initially, evaluator 130 generates evaluation results 136a. However, if evaluation results 136a are undeservedly high, there is a risk that an underperforming code intelligence tool update 110 could be used to update operational code intelligence tool 160, degrading performance observed by programmer 172. Thus, evaluator 130 itself requires evaluation.

A two-tier evaluation is introduced. Evaluator 130 evaluates code intelligence tool update 110, and an evaluator tuner 200 evaluates (and tunes) evaluator 130. Evaluator 130 provides scaling, because it is able to process the volume of test results 124 (which is beyond the capability of humans), and evaluator tuner 200 ensures accuracy, reliability, and robust performance of evaluator 130. The operations of evaluator tuner 200 are scaled down (from that of evaluator 130) sufficiently that human expertise may be applied effectively to evaluator tuner 200. In this way, architecture 100 acts as a scalable amplifier of human expertise in programming skill, providing a practical tool that can be applied to solve problems that are necessarily rooted in computer technology.

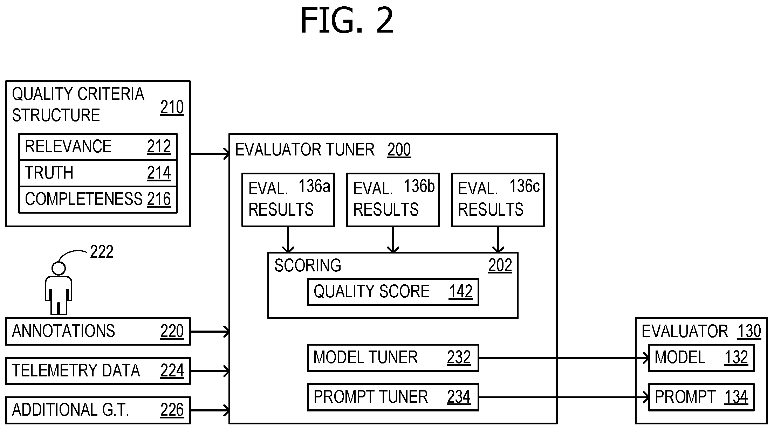

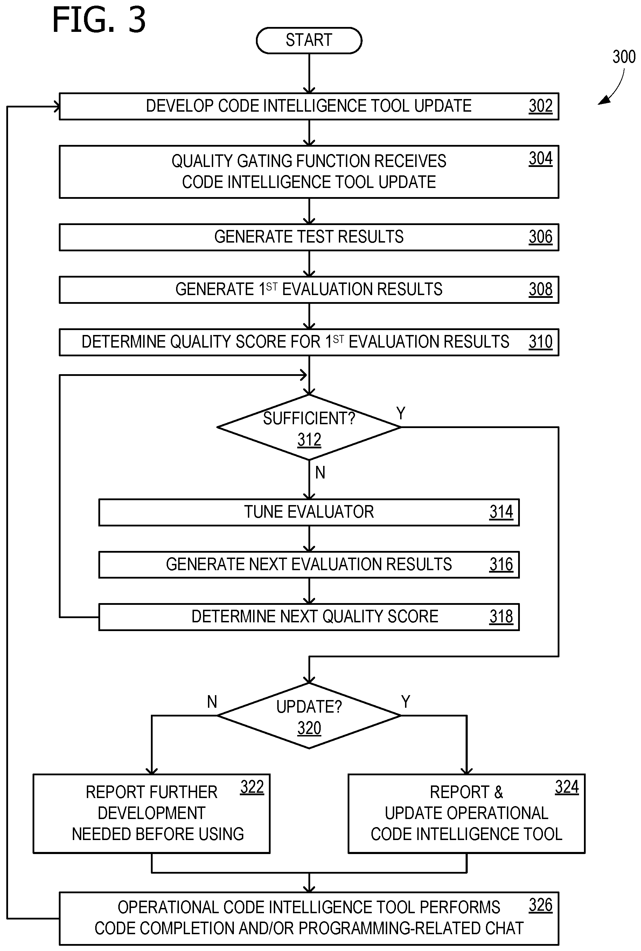

As is described in further detail below, in relation to FIGs. 2 and 3, a quality score 142 is assigned for evaluation results 136a, and compared with a desired quality score 144. This comparison provides an assessment of the performance of evaluator 130 (rather than an assessment of code intelligence tool update 110). Although various examples of architecture 100 may be differently implemented, some examples use a gatekeeper function 140 to assess the performance of evaluator 130.

In the illustrated example, quality score 142 does not meet desired quality score 144, so evaluator tuner 200 tunes evaluator 130 in a manner designed to improve quality score 142. This is also described below, in relation to FIGs. 2 and 3. After the tuning, evaluator 130 then generates evaluation results 136b, quality score 142 is then assigned for evaluation results 136b, and compared with desired quality score 144. In the illustrated example, this new quality score 142 also does not meet desired quality score 144, so evaluator tuner 200 again tunes evaluator 130 in a manner designed to improve quality score 142. After this further tuning, evaluator 130 then generates evaluation results 136c, quality score 142 is then assigned for evaluation results 136c, and compared with desired quality score 144. Evaluation results 136c are reliable, as determined by quality score 142 now meeting desired quality score 144.

Gatekeeper function 140 then permits evaluation results 136c to be passed to a gatekeeper function 150 that uses evaluation results 136c to assess the performance of code intelligence tool update 110. If evaluation results 136c meet success criteria 152, code intelligence tool update 110 performs sufficiently well to be used to update operational code intelligence tool 160. Otherwise, if evaluation results 136c do not meet success criteria 152, code intelligence tool update 110 does not perform sufficiently well to be used to update operational code intelligence tool 160, and code intelligence tool update 110 requires further development by developer 102.

FIG. 2 illustrates further detail for evaluator tuner 200 leverages evaluation results 136a, evaluation results 136b, and evaluation results 136c to ascertain whether and how to tune evaluator 130. Evaluator tuner 200 has a model tuner 232 and a prompt tuner 234, each of which may itself comprise an AI model or other ML functionality. Model tuner 232 is operative to tune evaluation model 132 to improve quality score 142, and prompt tuner 234 is operative to tune evaluation prompt 134 to improve quality score 142. A scoring component 202 determines quality score 142.

Quality score 142 is based on a hierarchical quality criteria structure 210 that uses relevance criteria 212, truth criteria 214, and completeness criteria 216 - each of which may be assessed separately for evaluation results 136a, 136b, and 136c. Together, relevance criteria 212, truth criteria 214, and completeness criteria 216 comprise RTC criteria. Annotators 222, which may be skilled humans or other suitable AI models provide annotations 220 to evaluator tuner 200, based on hierarchical quality criteria structure 210. Telemetry data 224 is provided by other processes (as described below) to evaluator tuner 200. Evaluator tuner 200 uses annotations 220 and telemetry data 224 as ground truth to determine what tuning is needed for evaluator 130, along with additional ground truth criteria 226. Additional ground truth criteria 226, may include high-quality responses as rated by non-scalable reference-based systems, and naturalistic ratings in real coding sessions (e.g., helpfulness).

The approach integrated into architecture 100 may be described at a high level as: (1) define a quality taxonomy using hierarchical criteria structure 210, (2) define rating methods for each category of the criteria (i.e., each of relevance criteria 212, truth criteria 214, and completeness criteria 216), (3) compute RTC scores using evaluator tuner 200 to categorize conversations into sub categories of code intelligence based on the defined criteria and rating methods, (4) tuning evaluation prompt 134 and/or evaluation model 132 using ground truth (e.g., annotations 220, telemetry data 224) to improve accuracy, and (5) repeat stages (3) and (4) until evaluator 130 performs reliable (e.g., as measured by comparing quality score 142 with desired quality score 144). Evaluator 130 may then be used for quality gating with much higher performance.

Hierarchical criteria structure 210 represents quality, which is an abstract criteria, using multiple less-abstract criteria: e.g., relevance, truth, and completeness (RTC) is a proxy for quality, and each RTC component may be treated separately, combined into higher-order constructs, or decomposed into lower-level constructs (e.g., relevance comprises "topic matches", "scope matches", and/or others). The structure of the criteria may be validated by establishing that the criteria are empirically distinct, cognitive pretesting with human raters regarding the importance and distinction/structure of the criteria, and factor analysis using human and/or ratings by evaluator 130.

In some examples, the ratings for each category of the criteria may be numerical scores of 0 through 4, with 0 being least relevant and 4 being most relevant. This rating approach is designed to optimize accuracy and may validated by leveraging annotations 220, telemetry data 224, and additional ground truth criteria 226. Annotations may be collected by asking annotators 222 to assess a collection of exemplary data. Telemetry data 224 may include in-product surveys (e.g., thumbs up / thumbs down) where users report quality and user engagement signals (e.g., acceptance / rejection). Use of telemetry data 224 may involve considering correlations with user metrics (thumbs up rating, acceptance rate) and consistency in scoring across segments (e.g., performance for code summarization versus code completion or code generation). Tuning may include use of annotation metadata, such as an explanation by evaluator 130 of evaluation results and confidence the evaluation results, use for weighting or exclusion.

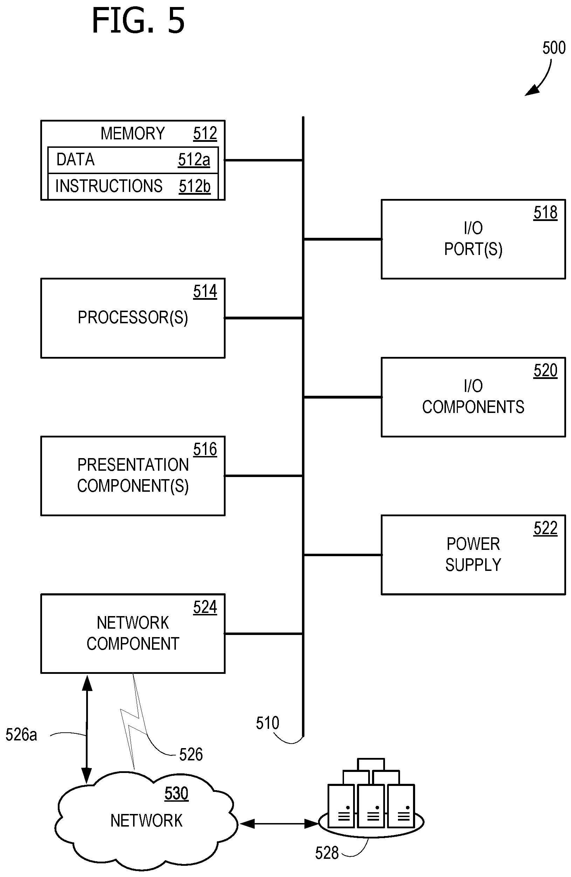

FIG. 3 shows a flowchart 300 illustrating exemplary operations that may be performed by architecture 100. In some examples, operations described for flowchart 300 are performed by computing device 500 of FIG. 5. Flowchart 300 commences with development of code intelligence tool update 110, in operation 302. Quality gating function 120 receives code intelligence tool update 110 in operation 304. In some examples, code intelligence tool update 110 comprises a replacement for at least a portion of operational code intelligence tool 160. Code intelligence tool update 110 comprises language model 112, and operational code intelligence tool 160 comprises language model 162. In some examples, code intelligence tool update 110 and operational code intelligence tool 160 are each operative to perform code completion (code generation) and/or provide a chat service regarding software code.

Code intelligence tool update 110 operates on code intelligence tool test data 106 to generate test results 124 in operation 306, and evaluator 130 operates on test results 124 to generate evaluation results 136a in operation 308. Evaluator 130 comprises evaluation model 132 and evaluation prompt 134. Quality score 142 is determined for evaluation results 136a in operation 310, using hierarchical quality criteria structure 210. In some examples, hierarchical quality criteria structure 210 comprises RTC criteria, and operation 310 comprises rating the evaluation results separately for each of relevance criteria 212, truth criteria 214, and completeness criteria 216. In some examples, operation 310 comprises receiving annotations 220, telemetry data 224, and/or additional ground truth data 226, and comparing them with evaluation results 136a.

Decision operation 312 determines whether desired quality score 144 is achieved (i.e., quality score 142 meets desired quality score 144). If so, flowchart 300 moves to decision operation 320. Otherwise, flowchart 300 iterates operations 314-318, generating further evaluation results and tuning evaluator 130 until desired quality score 144 is achieved.

Evaluator tuner 200 tunes evaluator 130 to improve quality score 142 in operation 314, such as by tuning evaluation model 132 and/or tuning evaluation prompt 134. Evaluation model 132 and tuning evaluation prompt 134 may be tuned separately. After being tuned in operation 314, evaluator 130 operates on test results 124 to generate new evaluation results, such as evaluation results 136b, or later, evaluation results 136c, in operation 316. In operation 318, a new quality score 142 is determined for the evaluation results produced in operation 316 (e.g., evaluation results 136b or evaluation results 136c), using hierarchical quality criteria structure 210. Flowchart 300 then returns to decision operation 312.

Decision operation 320 uses success criteria 152 to determine whether to update operational code intelligence tool 160 with code intelligence tool update 110. For flowchart 300 to reach decision operation 320 may be based on at least quality score 142 meeting desired quality score 144. If evaluation results 136c do not meet success criteria 152, flowchart 300 moves to operation 322, and operational code intelligence tool 160 is not updated with code intelligence tool update 110. This may be reported to developer 102.

If, however, evaluation results 136c does meet success criteria 152, flowchart 300 moves to operation 324, and operational code intelligence tool 160 is updated with code intelligence tool update 110. This too may be reported to developer 102. Flowchart 300 then moves to operation 326 (from wither operation 322 or 324) in which code intelligence tool update 110 is employed for code completion and, or a chat service regarding software code that answers software programming questions with software code and/or natural language. Flowchart 300 then returns to operation 302 for further development of code intelligence tool update 110 for a future update of operational code intelligence tool 160. Flowchart 300 remains ongoing for continued improvement of operational code intelligence tool 160.

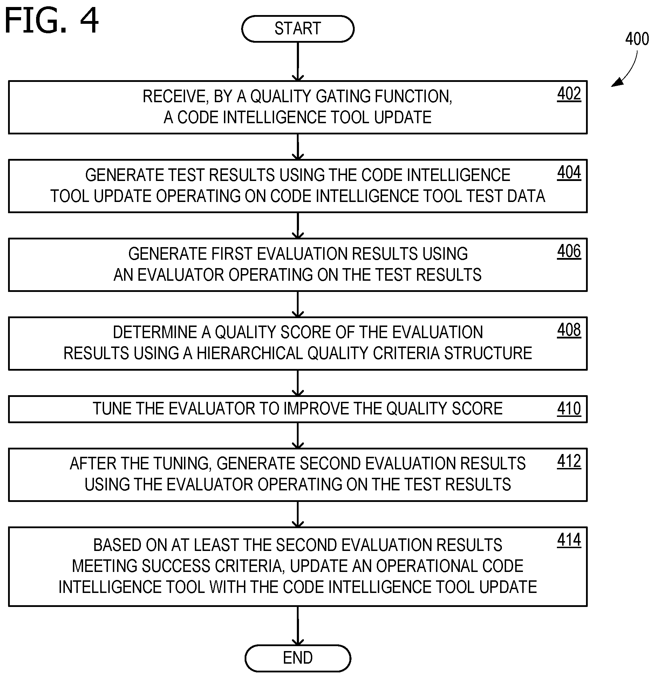

FIG. 4 shows a flowchart 400 illustrating exemplary operations that may be performed by architecture 100. In some examples, operations described for flowchart 400 are performed by computing device 500 of FIG. 5. Flowchart 400 commences with operation 402, which includes receiving, by a quality gating function, a code intelligence tool update. Operation 404 includes generating test results using the code intelligence tool update operating on code intelligence tool test data.

Operation 406 includes generating first evaluation results using an evaluator operating on the test results. Operation 408 includes determining a quality score of the first evaluation results using a hierarchical quality criteria structure. Operation 410 includes tuning the evaluator to improve the quality score. Operation 412 includes, after the tuning, generating second evaluation results using the evaluator operating on the test results. Operation 414 includes, based on at least the second evaluation results meeting success criteria, updating an operational code intelligence tool with the code intelligence tool update.

### Additional Examples

An example system comprises: a processor; and a computer-readable medium storing instructions that are operative upon execution by the processor to: receive, by a quality gating function, a code intelligence tool update; generate test results using the code intelligence tool update operating on code intelligence tool test data; generate first evaluation results using an evaluator operating on the test results; determine a quality score of the first evaluation results using a hierarchical quality criteria structure; tune the evaluator to improve the quality score; after the tuning, generate second evaluation results using the evaluator operating on the test results; and based on at least the second evaluation results meeting success criteria, update an operational code intelligence tool with the code intelligence tool update.

An example computer-implemented method comprises: receiving, by a quality gating function, a code intelligence tool update; generating test results using the code intelligence tool update operating on code intelligence tool test data; generating first evaluation results using an evaluator operating on the test results; determining a quality score of the first evaluation results using a hierarchical quality criteria structure; tuning the evaluator to improve the quality score; after the tuning, generating second evaluation results using the evaluator operating on the test results; and based on at least the second evaluation results meeting success criteria, updating an operational code intelligence tool with the code intelligence tool update.

One or more example computer storage devices have computer-executable instructions stored thereon, which, on execution by a computer, cause the computer to perform operations comprising: receiving, by a quality gating function, a code intelligence tool update; generating test results using the code intelligence tool update operating on code intelligence tool test data; generating first evaluation results using an evaluator operating on the test results; determining a quality score of the first evaluation results using a hierarchical quality criteria structure; tuning the evaluator to improve the quality score; after the tuning, generating second evaluation results using the evaluator operating on the test results; and based on at least the second evaluation results meeting success criteria, updating an operational code intelligence tool with the code intelligence tool update.

Alternatively, or in addition to the other examples described herein, examples include any combination of the following:
- employing the code intelligence tool update for code completion or a chat service regarding software code;
- the evaluator comprises an evaluation model and an evaluation prompt;
- tuning the evaluator comprises tuning the evaluation model and/or tuning the evaluation prompt;
- using the success criteria, determining whether to update the operational code intelligence tool with the code intelligence tool update;
- iterating generating evaluation results and tuning the evaluator until a desired quality score is achieved;
- determining whether to update the operational code intelligence tool with the code intelligence tool update is based on at least achieving the desired quality score;
- the hierarchical quality criteria structure comprises RTC criteria;
- determining the quality score comprises rating the first and second evaluation results separately for each of the relevance criteria, the truth criteria, and the completeness criteria;
- determining the quality score comprises receiving annotations, or receiving telemetry data, or comparing the evaluation results with ground truth data;
- the quality gating function comprises an offline quality gating function;
- the code intelligence tool update comprises a replacement for at least a portion of the operational code intelligence tool;
- the code intelligence tool update and the operational code intelligence tool are each operative to perform code completion and/or provide a chat service regarding software code;
- the code intelligence tool update comprises a first language model;
- the operational code intelligence tool comprises a second language model;
- providing the chat service regarding software code comprises answering software programming questions with software code and/or natural language;
- based on at least the second evaluation results not meeting the success criteria, not updating the operational code intelligence tool with the code intelligence tool update; and
- tuning of the evaluation model and tuning of the evaluation prompt are performed separately.

While the aspects of the disclosure have been described in terms of various examples with their associated operations, a person skilled in the art would appreciate that a combination of operations from any number of different examples is also within scope of the aspects of the disclosure.

### Example Operating Environment

FIG. 5 is a block diagram of an example computing device 500 (e.g., a computer storage device) for implementing aspects disclosed herein, and is designated generally as computing device 500. In some examples, one or more computing devices 500 are provided for an on-premises computing solution. In some examples, one or more computing devices 500 are provided as a cloud computing solution. In some examples, a combination of on-premises and cloud computing solutions are used. Computing device 500 is but one example of a suitable computing environment and is not intended to suggest any limitation as to the scope of use or functionality of the examples disclosed herein, whether used singly or as part of a larger set.

Neither should computing device 500 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 500 includes a bus 510 that directly or indirectly couples the following devices: computer storage memory 512, one or more processors 514, one or more presentation components 516, input/output (I/O) ports 518, I/O components 520, a power supply 522, and a network component 524. While computing device 500 is depicted as a seemingly single device, multiple computing devices 500 may work together and share the depicted device resources. For example, memory 512 may be distributed across multiple devices, and processor(s) 514 may be housed with different devices.

Bus 510 represents what may be one or more buses (such as an address bus, data bus, or a combination thereof). Although the various blocks of FIG. 5 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 5 and the references herein to a "computing device." Memory 512 may take the form of the computer storage media referenced below and operatively provide storage of computer-readable instructions, data structures, program modules and other data for the computing device 500. In some examples, memory 512 stores one or more of an operating system, a universal application platform, or other program modules and program data. Memory 512 is thus able to store and access data 512a and instructions 512b that are executable by processor 514 and configured to carry out the various operations disclosed herein. Thus, computing device 500 comprises a computer storage device having computer-executable instructions 512b stored thereon.

In some examples, memory 512 includes computer storage media. Memory 512 may include any quantity of memory associated with or accessible by the computing device 500. Memory 512 may be internal to the computing device 500 (as shown in FIG. 5), external to the computing device 500 (not shown), or both (not shown). Additionally, or alternatively, the memory 512 may be distributed across multiple computing devices 500, for example, in a virtualized environment in which instruction processing is carried out on multiple computing devices 500. For the purposes of this disclosure, "computer storage media," "computer storage memory," "memory," and "memory devices" are synonymous terms for the memory 512, and none of these terms include carrier waves or propagating signaling.

Processor(s) 514 may include any quantity of processing units that read data from various entities, such as memory 512 or I/O components 520. Specifically, processor(s) 514 are programmed to execute computer-executable instructions for implementing aspects of the disclosure. The instructions may be performed by the processor, by multiple processors within the computing device 500, or by a processor external to the client computing device 500. In some examples, the processor(s) 514 are programmed to execute instructions such as those illustrated in the flow charts discussed below and depicted in the accompanying drawings. Moreover, in some examples, the processor(s) 514 represents an implementation of analog techniques to perform the operations described herein. For example, the operations may be performed by an analog client computing device 500 and/or a digital client computing device 500. Presentation component(s) 516 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 500, across a wired connection, or in other ways. I/O ports 518 allow computing device 500 to be logically coupled to other devices including I/O components 520, some of which may be built in. Example I/O components 520 include, for example but without limitation, a microphone, joystick, game pad, satellite dish, scanner, printer, wireless device, etc.

Computing device 500 may operate in a networked environment via the network component 524 using logical connections to one or more remote computers. In some examples, the network component 524 includes a network interface card and/or computer-executable instructions (e.g., a driver) for operating the network interface card. Communication between the computing device 500 and other devices may occur using any protocol or mechanism over any wired or wireless connection. In some examples, network component 524 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 524 communicates over wireless communication link 526 and/or a wired communication link 526a to a remote resource 528 (e.g., a cloud resource) across network 530. Various different examples of communication links 526 and 526a include a wireless connection, a wired connection, and/or a dedicated link, and in some examples, at least a portion is routed through the internet.

Although described in connection with an example computing device 500, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system comprising:
a processor (514); and
a computer-readable medium (512) storing instructions (512b) that are operative upon execution by the processor to:
receive (402), by a quality gating function (120), a code intelligence tool update (110);
generate (404) test results (124) using the code intelligence tool update operating on code intelligence tool test data (106);
generate (406) first evaluation results(136a) using an evaluator (130) operating on the test results;
determine (408) a quality score (142) of the first evaluation results using a hierarchical quality criteria structure (210);
tune (410) the evaluator to improve the quality score;
after the tuning, generate (412) second evaluation results (136c) using the evaluator operating on the test results; and
based on at least the second evaluation results meeting success criteria (152), update (414) an operational code intelligence tool (160) with the code intelligence tool update.

2. The system of claim 1, wherein the instructions are further operative to:
employ the code intelligence tool update for code completion or a chat service regarding software code.

3. The system of claim 1 or claim 2, wherein the evaluator comprises an evaluation model and an evaluation prompt, and wherein tuning the evaluator comprises tuning the evaluation model and/or tuning the evaluation prompt.

4. The system of any preceding claim, wherein the instructions are further operative to:
using the success criteria, determine whether to update the operational code intelligence tool with the code intelligence tool update.

5. The system of claim 4, wherein the instructions are further operative to:
iterate generating evaluation results and tuning the evaluator until a desired quality score is achieved, wherein determining whether to update the operational code intelligence tool with the code intelligence tool update is based on at least achieving the desired quality score.

6. The system of any preceding claim, wherein the hierarchical quality criteria structure comprises relevance criteria, truth criteria, and completeness criteria, and wherein determining the quality score comprises:
rating the first evaluation results separately for each of the relevance criteria, the truth criteria, and the completeness criteria.

7. The system of any preceding claim, wherein determining the quality score comprises:
receiving annotations, or receiving telemetry data, or comparing the evaluation.

8. A computer-implemented method comprising:
receiving (402), by a quality gating function (120), a code intelligence tool update (110);
generating (404) test results (124) using the code intelligence tool update operating on code intelligence tool test data (106);
generating (406) first evaluation results(136a) using an evaluator (130) operating on the test results;
determining (408) a quality score (142) of the first evaluation results using a hierarchical quality criteria structure (210);
tuning (410) the evaluator to improve the quality score;
after the tuning, generating (412) second evaluation results (136c) using the evaluator operating on the test results; and
based on at least the second evaluation results meeting success criteria (152), updating (414) an operational code intelligence tool (160) with the code intelligence tool update.

9. The method of claim 8, further comprising:
employing the code intelligence tool update for code completion or a chat service regarding software code.

10. The method of claim 8 or claim 9, wherein the evaluator comprises an evaluation model and an evaluation prompt, and wherein tuning the evaluator comprises tuning the evaluation model and/or tuning the evaluation prompt.

11. The method of any of claims 8 to 10, further comprising:
using the success criteria, determining whether to update the operational code intelligence tool with the code intelligence tool update.

12. The method of claim 11, further comprising:
iterating generating evaluation results and tuning the evaluator until a desired quality score is achieved, wherein determining whether to update the operational code intelligence tool with the code intelligence tool update is based on at least achieving the desired quality score.

13. The method of any of claims 8 to 12, wherein the hierarchical quality criteria structure comprises relevance criteria, truth criteria, and completeness criteria, and wherein determining the quality score comprises:
rating the first evaluation results separately for each of the relevance criteria, the truth criteria, and the completeness criteria.

14. The method of any of claims 8 to 13, wherein determining the quality score comprises:
receiving annotations, or receiving telemetry data, or comparing the evaluation results with ground truth data.

15. A computer storage device having computer-executable instructions stored thereon, which, on execution by a computer, cause the computer to perform operations comprising:
receiving (402), by a quality gating function (120), a code intelligence tool update (110);
generating (404) test results (124) using the code intelligence tool update operating on code intelligence tool test data (106);
generating (406) first evaluation results(136a) using an evaluator (130) operating on the test results;
determining (408) a quality score (142) of the first evaluation results using a hierarchical quality criteria structure (210);
tuning (410) the evaluator to improve the quality score;
after the tuning, generating (412) second evaluation results (136c) using the evaluator operating on the test results; and
based on at least the second evaluation results meeting success criteria (152), updating (414) an operational code intelligence tool (160) with the code intelligence tool update.
